# FASCICULE DE BREVET EUROPEEN

(11) **EP 2 032 438 B1**
(45) Date de publication et mention de la délivrance du brevet: **05.05.2010**
(21) Numéro de dépôt: 07765526.4
(22) Date de dépôt: 20.06.2007
(51) Int. Cl.: B64G 1/22

(54) **ARTICULATION AUTO-MOTORISEE POUR ENSEMBLE ARTICULE TEL QU'UN PANNEAU SOLAIRE DE SATELLITE**
SELBSTANGETRIEBENES GELENK FÜR EINE GELENKANORDNUNG, WIE ZUM BEISPIEL EIN SATELLITENSONNENPANEEL
SELF-DRIVEN ARTICULATION FOR AN ARTICULATED ASSEMBLY SUCH AS A SATELLITE SOLAR PANEL

(30) Priorité: 23.06.2006 FR 0605653
(43) Date de publication de la demande: 11.03.2009
(73) Titulaire: Thales, 92200 Neuilly Sur Seine (FR)
(72) Inventeur: BAUDASSE, Yannick, 06130 GRASSE (FR); VEZAIN, Stéphane, 06210 Mandelieu (FR)
(74) Mandataire: Esselin, Sophie
(86) Numéro de dépôt international: PCT/EP2007/056164
(87) Numéro de publication internationale: WO 2007/147859

(56) Documents cités:
- EP-A1- 0 354 837
- FR-A1- 2 662 219
- US-A- 4 558 911

## Description

L'invention concerne une articulation auto-motorisée, conçue pour assurer à la fois le déploiement automatique des éléments qu'elle relie ainsi que le verrouillage de ces éléments en position déployée. L'invention concerne également un ensemble articulé constitué de différents éléments reliés entre eux par de telles articulations.

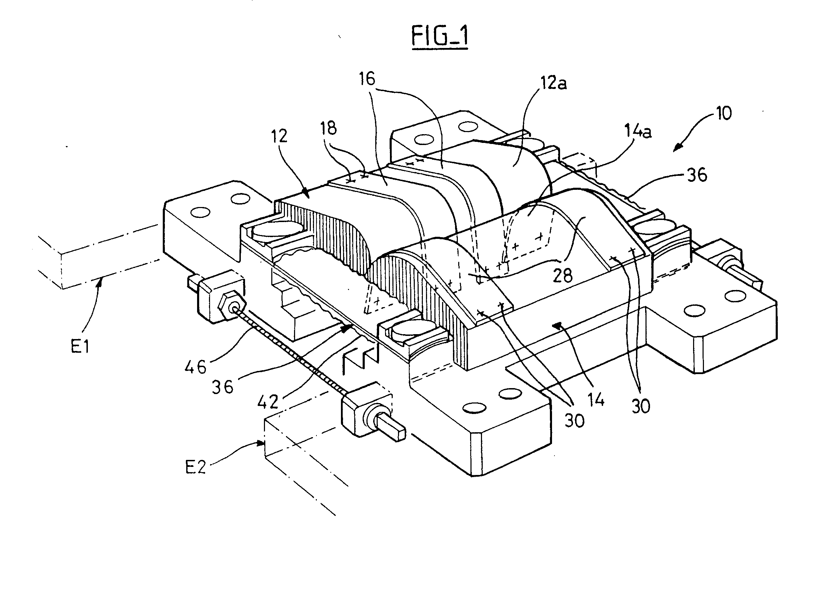

L'invention s'applique tout particulièrement mais non exclusivement au domaine spatial et notamment dans la fabrication des panneaux solaires des satellites qui sont formés de différents éléments articulés entre eux comme illustré sur la figure 1 et dont le déploiement intervient dans l'espace. De nombreuses autres applications peuvent être envisagées aussi bien dans le domaine spatial que sur terre.

Actuellement les différents éléments constituant les panneaux solaires articulés sont généralement reliés entre eux par une articulation telle que représentée sur la figure 1 et qui a fait l'objet d'un dépôt de demande de brevet FR 2 635 077 publié le 08 août 1988.

Cette articulation se présente sous la forme d'un système mécanique auto-motorisé permettant son ouverture et par voie de conséquence le déploiement des éléments qui lui sont reliés grâce à un ensemble d'éléments mécaniques coopérant et en particulier grâce à des lames d'enroulement croisées fixées sur des poutres de mise en tension (permettant une précontrainte de traction), se déroulant sous l'action d'une ou plusieurs lames de motorisation sous contraintes exerçant un couple moteur lorsqu'un dispositif de maintien de l'élément articulé en position repliée est relâché.

Le dispositif de maintien du générateur solaire est extérieur à l'articulation et est généralement réalisé par un boulon ou coupe tirant explosif.

Le système décrit dans l'art antérieur ne permet pas d'assurer une tension stable et régulière dans les lames d'enroulement, du fait de nombreuses pertes de tension par frottements entre les formes cylindriques des ferrures et les lames d'enroulement (la tension des lames d'enroulement étant obtenu par des poutres aux extrémités), et ce quelque soit la configuration de l'articulation.

De plus, les lames d'enroulement assurent la double fonction de « guidage en rotation» et « reprise des charges au lancement ». Ceci impose de fortes contraintes mécaniques entre les deux pistes afin d'assurer le non décollement des deux parties de l'articulation. Il en résulte un fort risque de dégradation des pistes de roulement (en stocké), ainsi qu'un risque de non déploiement dû à une très forte sensibilité aux pollutions sur les pistes tout au long du déploiement.

La présente invention telle que revendiquée dans la revendication 1 a pour but de résoudre ces problèmes.

L'articulation proposée selon l'invention, du fait des nouvelles possibilités d'allègement qu'elle propose, est particulièrement adaptée aux volets latéraux des générateurs solaires de type LPS (Light Panel Structure).

Cette articulation permet aussi d'assurer tout comme l'articulation décrite dans le document cité constituant l'état de la technique le plus proche, un couple résistant minimal lors du déploiement et une garantie de son intégrité sans nécessiter son déploiement complet.

La présente invention a plus particulièrement pour objet, une articulation auto-motorisée sans frottement conçue pour être montée entre deux éléments voisins, comprenant deux ferrures cylindriques entraînées en rotation sous l'action d'au moins un élément flexible, de type lame ressort, les extrémités de cet élément étant fixées respectivement sur chacune des ferrures, principalement caractérisée en ce qu'elle comprend des moyens de maintien des ferrures et des moyens de reprise des charges distincts des moyens de maintien.

Les pistes flexibles sont fixées sur les ferrures de manière à être en vis-à-vis deux à deux.

Comme dans l'art antérieur, l'élément flexible, de type lame ressort, est décalé par rapport au point de contact, des pistes flexibles, ce qui permet d'assurer un verrouillage en position déployée.

Les moyens de reprise de charges comportent un dispositif de couplage et au moins deux lames latérales souples.

Le dispositif de couplage comporte deux doigts de reprises de charge chacun fixé sur une piste flexible et deux logements fixés sur les pistes flexibles en vis-à-vis, associés aux deux lames latérales, chacune fixée respectivement à chaque extrémité aux deux ferrures, pour assurer une fonction anti-écartement de l'articulation.

Ainsi, en position stockée, les deux doigts de reprise des charges et les deux logements en vis-à-vis, couplés aux deux lames latérales assurant une fonction anti-écartement de l'articulation, permettent d'assurer un maintien en position et en particulier une reprise d'effort, en cas de forte charge.

Chaque piste flexible est fixée par une extrémité sur une ferrure extérieurement aux fixation des lames d'enroulement et en vis-à-vis deux à deux.

D'autres particularités et avantages de l'invention apparaîtront clairement à la lecture de la description qui est faite ci-après et qui est donnée à titre d'exemple illustratif et non limitatif et en regard des figures sur lesquelles :
La figure 1 représente le schéma d'une articulation selon l'état de la technique,

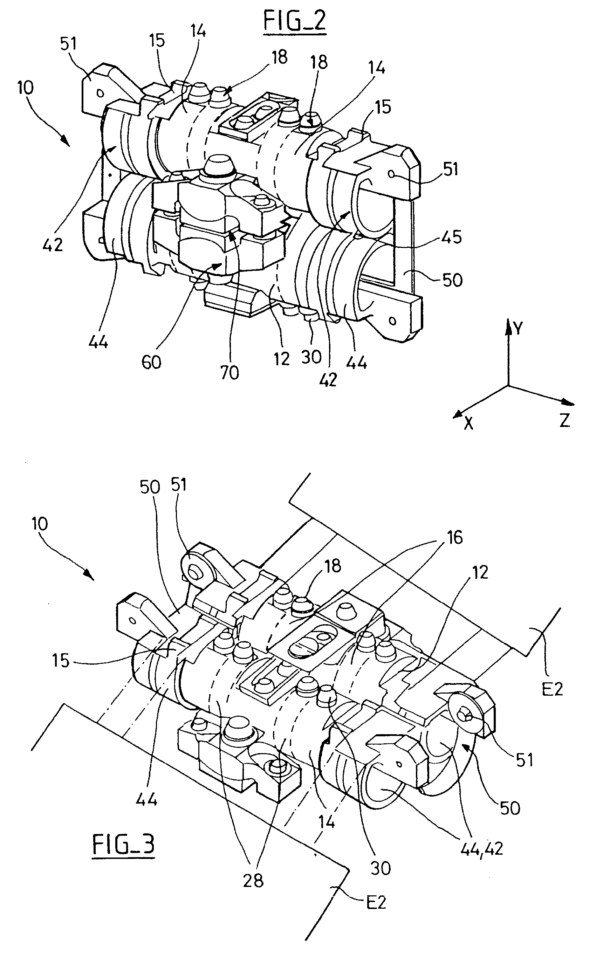

La figure 2 représente le schéma d'une articulation selon l'invention, l'articulation étant en position « stockée »,
La figure 3 représente le schéma de l'articulation selon l'invention en position déployée,
La figure 4 représente schématiquement la cinématique de déploiement de l'articulation illustrée par les étapes 1, 2 de configuration stocké et début du déploiement,
La figure 5 représente schématiquement la cinématique de déploiement de l'articulation illustrée par les étapes 3 à 6 permettant de passer la position déployée.

L'articulation selon l'invention comporte deux ferrures 12, 14 constituées par exemple de deux blocs métalliques cylindriques usinés. Ces ferrures sont éventuellement allégées par des évidements lorsque l'application le justifie comme c'est notamment le cas dans le domaine spatial. Chacune des ferrures 12 et 14 est prévue pour être fixée sur un élément correspondant E1, E2 par tout moyen approprié tel que des vis ou des rivets au niveau des ancrages 15.

Les pistes flexibles 42 et 44 comportent chacune un surface cylindrique 42a et 44a présentant en section la forme d'un arc de cercle dont la longueur est supérieure à 270°.Les rayons de surface cylindrique 42a et 44a sont égaux.

Ainsi les surfaces des pistes flexibles 42 et 44 sont aptes à rouler l'une sur l'autre pour permettre aux éléments E1 et E2 de se déplacer entre deux positions extrêmes décalées de 180° l'une par rapport à l'autre. Lorsque les éléments E1 et E2 sont des éléments plans, la première de ces positions est dite repliée ou stockée, correspondant au cas où les éléments E1 et E2 sont repliés l'un contre l'autre et parallèles entre eux, alors que la deuxième position, dite position déployée, correspond au cas où ces éléments sont ouverts et disposés dans le même plan.

Afin de maintenir en contact permanent les surfaces cylindriques 42a et 44a des pistes flexibles lors de leur roulement l'une contre l'autre, l'articulation 10 comprend de plus des organes souples dont les extrémités sont fixées sur chacune de ferrures de façon à rouler sur les surfaces 12a et 14a. Ces organes se présentent sous la forme de quatre lames métalliques flexibles 16 et 28, réalisées par exemple en acier inoxydable que l'on appelle lames d'enroulement ou lames de conduite.

A titre d'exemple l'articulation 10 comprend deux lames d'enroulement centrales adjacentes 16, disposées dans la partie centrale des ferrures 12 et 14 et enroulées dans le même sens sur les surfaces cylindriques 12a et 14a de part et d'autre d'un plan médian commun à ces ferrures. Une première extrémité de chacune des lames d'enroulement 16 est fixée directement de la ferrure 12. Cette fixation est assurée par exemple par des vis 18. A partir de cette extrémité les lames 16 passent entre les surfaces cylindriques 12a et 14a des ferrures de façon à être successivement en contact avec la surface 12a puis avec la surface 14a. Un mouvement de l'articulation dans le sens du déploiement a donc pour effet de dérouler les lames d'une ferrure et simultanément de les enrouler sur la ferrure opposée.

Dans l'exemple illustré, l'articulation 10 comprend deux autres lames d'enroulement 28, fixées sur les parties intérieures des ferrures 12, 14, à proximité de chacune des lames 16 (qui elles, sont fixées sur les parties extérieures de ferrures 12, 14) de façon également symétrique par rapport à un plan médiane des ferrures. Ces lames d'enroulement sont enroulées en sens inverse des lames sur les ferrures de sorte que les lames 16, 28 se croisent sur les parties cylindriques 12a et 12b des ferrures.

L'articulation comporte en outre des pistes flexibles 42, 44 concentriques aux surfaces cylindriques des ferrures d'enroulement 12a, 14a.

Chaque piste 42 ou 44 est fixée par une extrémité à une ferrure extérieurement aux points d'attache 15 sur les ferrures. Les pistes flexibles 42 fixées sur la ferrure 12 sont en vis-à-vis avec les pistes 44 fixées sur la ferrure 14 et présentent un point de contact 45 sur leur surface extérieure.

L'utilisation des pistes flexibles 42, 44 pour assurer une précontrainte sur les lames d'enroulement 16, 28 permet d'appliquer un effort stable et uniforme tout au long du déploiement, en un point 45, sans perte de tension (ce qui était le cas avec l'articulation représentée sur la figure 1). Cette solution permet en effet d'exercer une tension directe au point de contact de roulement 45. Ainsi avec les pistes flexibles 42, 44, la précontrainte est stable dans toutes les configurations de l'articulation : stockée, en cours de déploiement et déployée.

Les lames latérales 50 fixées sur les ferrures par des vis 51 ou moyen équivalent, offrent une motorisation supplémentaire lors de l'ouverture. Ces lames 50 sont fixées de manière à être disposées dans un plan passant par les axes des ferrures en configuration stockée. Lors de l'ouverture, le décalage des lames par rapport à l'axe des ferrures provoque une légère motorisation qui permet de faciliter l'extraction des doigts de maintiens 61 de leur logement 62.

Le système de reprise d'efforts comprend deux doigts 61 et deux logements 62 en vis-à-vis maintenus sur un support 60, fixé sur les pistes flexibles 42, 44. Les doigts 61 ont une forme conique pour assurer un engagement ou dégagement aisé lors du déploiement des lames latérales 50.

Les doigts 61 sont destinés à la reprise des efforts suivant les axes X, Z et les moments de torsion autour de l'axe Y. les deux lames latérales (parallèles à l'axe Y) sont destinées à la reprise des efforts suivant l'axe Y et les moments de torsion autour de l'axe X ainsi que les efforts de dégagement des doigts.

En configuration stockée, les lames latérales 50 sont tendues, ces lames assurent une fonction anti-écartement de l'articulation. Les pistes flexibles 42, 44 sont précontraintes par les lames latérales 50. Cette précontrainte supplémentaire permet de détendre et donc de protéger les lames d'enroulement 16, 28 de toutes agressions mécaniques lors de la phase lancement.

En configuration stockée les charges appliquées sur l'articulation sont importantes. Dans l'exemple pratique de réalisation décrit et illustré par les figures, la fonction de maintien en position est donc assurée par les deux doigts 61 de reprise de charges et également par les deux lames de mise en précontrainte 50, les pistes flexibles 42 et 44, assurant le plaquage des doigts 61 dans leur logement respectif et la tension dans les lames latérales 50.

Dès la libération des appendices à déployer, l'articulation tourne sous l'effet de la motorisation combiné de l'élément flexible de motorisation 70 et des lames latérales 50, cette rotation de l'articulation, permet une séparation instantanée des doigts 61 (de forme conique).

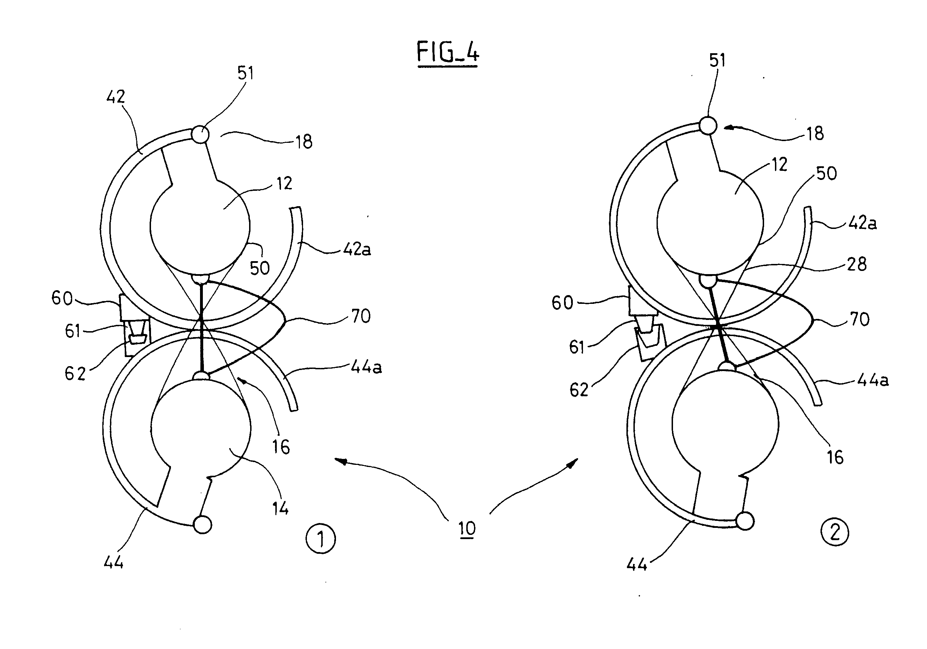

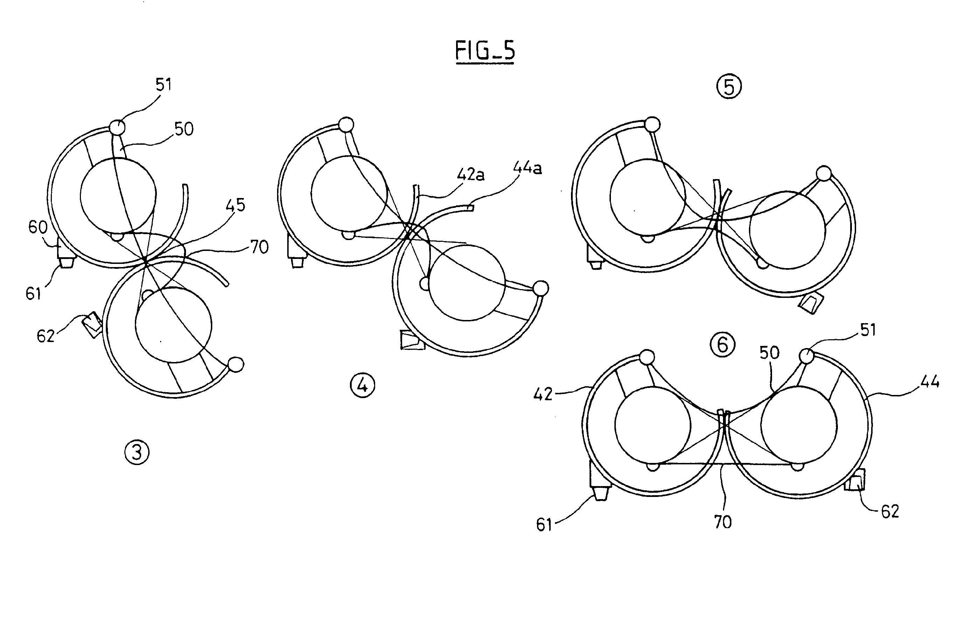

On peut se reporter pour le fonctionnement de l'articulation aux figures 4 et 5. Ces figures représentent schématiquement la cinématique de déploiement.

On a illustré sur la figure 4 les étapes 1, 2 correspondant respectivement à la configuration stockée et au début du déploiement (séparation des doigts). La suite est illustrée par les étapes 3 à 6 de la figure 5 aboutissant à la configuration finale (étape 6) déployée.

Lors des premiers degrés d'ouverture, sous l'action des pistes flexibles 42, 44, les lames d'enroulement 16, 28 se chargent progressivement jusqu'à une tension nominale. Simultanément, les lames latérales 50 se déchargent puis se replient sur elles même en offrant un couple résistant limité.

La solution décrite permet, du fait de la mise en place d'éléments spécifiques à la reprise des charges au lancement, une réduction de la tension dans les lames d'enroulement et a pour conséquence .

Une réduction du diamètre d'enroulement des lames sur les ferrures et donc une réduction importante de la taille et de la masse globale de l'articulation. A titre d'exemple la masse de l'articulation réalisée est de -50% (par rapport à l'art antérieur)

Cette solution permet également:
- L'obtention d'un couple moteur à tout moment du déploiement, ainsi qu'une sur-motorisation au début du déploiement.
- de garantir le déploiement (non collage des pièces) sans nécessité une ouverture complète,
- une réduction des coûts et des délais d'industrialisation d'une articulation à lames d'enroulement,
- une réduction de la masse et du volume d'une articulation à lames d'enroulement,
- une réduction notable des risques de non déploiement, due à des pollutions extérieures, du fait d'une tension réduite entres les pistes de roulement.
- une intégration simplifiée de l'articulation (notamment sur des panneaux de générateurs solaires).

## Revendications

1. Articulation auto-motorisée sans frottement conçue pour être montée entre deux éléments voisins (E1, E2), comprenant deux ferrures cylindriques (12, 14) entraînées en rotation sous l'action d'au moins un élément flexible (70), de type lame ressort, les extrémités de cet élément étant fixées respectivement sur chacune des ferrures, **caractérisée en ce qu'**elle comprend des moyens de maintien des ferrures (16, 28 ; 42, 44) et des moyens de reprise des charges (61, 62 ; 50) distincts des moyens de maintien et **en ce que** les moyens de maintien comportent des lames d'enroulement (16, 28) fixées par leurs extrémités aux ferrures et un moyen de mise en tension pour exercer une précontrainte de traction répartie sur chacune des lames d'enroulement comprenant des pistes flexibles (42, 44) concentriques aux ferrures et fixées par une extrémité aux ferrures et situées aux extrémités de ces dernières

2. Articulation selon la revendication 1, **caractérisée en ce que** les moyens de reprise de charges comportent un dispositif de couplage et au moins deux lames latérales souples (50).

3. Articulation selon l'une quelconque des revendications précédentes, **caractérisé en ce que** le dispositif de couplage comporte deux doigts de reprises de charge chacun fixé sur une piste flexible et deux logements fixés sur les pistes flexibles en vis-à-vis, associés aux deux lames latérales, chacune fixée respectivement à chaque extrémité aux deux ferrures, pour assurer une fonction anti-écartement de l'articulation.

4. Articulation selon la revendication 2, **caractérisé en ce que** chaque piste flexible est fixée par une extrémité sur une ferrure extérieurement aux fixation des lames d'enroulement (16, 28) et en vis-à-vis deux à deux.

## Claims

1. A frictionless self-driven articulation designed to be mounted between two neighbouring elements (E1, E2), comprising two cylindrical fittings (12, 14) driven by rotation under the action of at least one flexible element (70), of spring leaf type, the ends of this element being respectively mounted to each of the fittings, **characterised in that** it comprises means (16, 28; 42, 44) of retaining the fittings and load take-up means (61, 62; 50) distinct from the means of retention and **in that** the means of retention include winding strips (16, 28), the ends of which are attached to the fittings and a means of tensioning for exerting a traction pre-stress on each of the winding strips, including flexible tracks (42, 44) concentric to the fittings and attached by one end to the fittings and located at the ends of said fittings.

2. An articulation according to claim 1, **characterised in that** the load take-up means include a coupling device and at least two flexible lateral strips (50).

3. An articulation according to any one of the previous claims, **characterised in that** the coupling device includes two load take-up pins each attached to a flexible track and two sockets attached to the flexible tracks opposite each other, associated with the two lateral strips, each respectively mounted to each end of the two fittings, to provide an antiseparation function for the articulation.

4. An articulation according to claim 2, **characterised in that** each flexible track is attached by one end to a fitting outside the winding strip (16, 28) mounting opposite each other in pairs.

## Patentansprüche

1. Reibungsloses selbstangetriebenes Gelenk für die Montage zwischen zwei benachbarten Elementen (E1, E2), das zwei zylindrische Armaturen (12, 14) umfasst, die durch Rotation unter der Wirkung von wenigstens einem flexiblen Element (70) des Federblatttyps angetrieben werden, wobei die Enden dieses Elements jeweils an einer der Armaturen montiert sind, **dadurch gekennzeichnet, dass** es Armaturhaltemittel (16, 28; 42, 44) und Lastaufnahmemittel (61, 62; 50) getrennt von den Haltemitteln umfasst, und **dadurch**, dass die Haltemittel Wickelbänder (16, 28), deren Enden an den Armaturen angebracht sind, und ein Spannmittel zum Aufbringen einer Zugvorspannung auf jedes der Wickelbänder aufweisen, umfassend flexible Bahnen (42, 44) konzentrisch zu den Armaturen und mit einem Ende an der Armatur angebracht und an den Enden derselben positioniert.

2. Gelenk nach Anspruch 1, **dadurch gekennzeichnet, dass** die Lastaufnahmemittel eine Kopplungsvorrichtung und wenigstens zwei flexible laterale Bänder (50) aufweisen.

3. Gelenk nach einem der vorherigen Ansprüche, **dadurch gekennzeichnet, dass** die Kopplungsvorrichtung zwei jeweils an einer flexiblen Bahn angebrachte Lastaufnahmebolzen und zwei Aufnahmen aufweist, die einander gegenüber liegend an den flexiblen Bahnen angebracht, mit den beiden lateralen Streifen assoziiert und jeweils an jedem Ende der beiden Armaturen montiert sind, um eine Trennschutzfunkton für das Gelenk bereitzustellen.

4. Gelenk nach Anspruch 2, **dadurch gekennzeichnet, dass** jede flexible Bahn mit einem Ende an einer Armatur außerhalb der Befestigung der Wickelbänder (16, 28) paarweise einander gegenüber angebracht ist.
